# EUROPÄISCHE PATENTSCHRIFT

(11) **EP 4 315 518 B1**
(45) Veröffentlichungstag und Bekanntmachung des Hinweises auf die Patenterteilung: **29.04.2026**
(21) Anmeldenummer: 22713674.4
(22) Anmeldetag: 17.03.2022
(51) Int. Cl.: H01R 13/453

(54) **VERSCHLUSSEINRICHTUNG**
CLOSURE DEVICE
DISPOSITIF DE FERMETURE

(30) Priorität: 24.03.2021 BE 202105220
(43) Veröffentlichungstag der Anmeldung: 07.02.2024
(73) Patentinhaber: Phoenix Contact e-Mobility GmbH, 32816 Schieder-Schwalenberg (DE)
(72) Erfinder: FOLLMANN, Simon, 32699 Extertal (DE); FUNKE, Christian, 32758 Detmold (DE)
(74) Vertreter: Meyer-Graefe, Karsten
(86) Internationale Anmeldenummer: PCT/EP2022/056903
(87) Internationale Veröffentlichungsnummer: WO 2022/200152

(56) Entgegenhaltungen:
- EP-B1- 2 685 568
- DE-A1- 102014 108 728

## Beschreibung

Die vorliegende Erfindung betrifft eine Verschlusseinrichtung für einen Steckverbinder, vorzugsweise eine Steckdose, mit zumindest einem elektrischen Kontaktelement, wobei die Verschlusseinrichtung ein Gehäuse mit einer Gehäuseöffnung zur Betätigung der Verschlusseinrichtung durch einen in der Steckrichtung geführten Steckabschnitt eines Gegensteckverbinders aufweist, wobei in dem Gehäuse ein Koppelelement bewegbar, vorzugsweise rotatorisch und/oder translatorisch bewegbar, gelagert ist und mit dem zumindest einen Abdeckelement zur Betätigung des zumindest einen Abdeckelements zwischen einer Verschlussposition und einer Öffnungsposition gekoppelt ist, wobei in dem Gehäuse zumindest ein Freigabeelement bewegbar gelagert ist und konfiguriert ist, das Koppelelement freizugeben oder zu sperren, und wobei in dem Gehäuse zumindest ein Stellelement translatorisch bewegbar gelagert ist und konfiguriert ist, das Koppelelement nach Freigabe zu betätigen, um das zumindest eine Abdeckelement von der Verschlussposition in die Öffnungsposition zu betätigen.

Steckverbinder in Form von Steckern oder Steckdosen mit elektrischen Kontaktelementen zur Übertragung elektrischer Energie und/oder elektrischer Signale sind in einer Vielzahl an unterschiedlichen Konfigurationen und Ausbildungen aus dem Stand der Technik bekannt. Steckverbinder, welche beispielsweise im Bereich der Elektromobilität an Ladesäulen zum Einsatz kommen, müssen zum Aufladen elektrisch betriebener Fahrzeuge (Elektrofahrzeuge) häufig innerhalb kurzer Ladezeiten sehr große elektrische Ströme übertragen. Bei den Steckverbindern müssen vor allem elektrische Kontaktelemente zur Übertragung elektrischer Energie (so genannte Lastkontaktelemente) geschützt werden, um einerseits das Eindringen von Fremdkörpern in den Steckverbinder sowie andererseits Unfälle, insbesondere Stromschläge, zu vermeiden. Hierzu werden so genannte "Shutter"-Lösungen als mechanische Berührungsschutzmechanismen oder Verschlusseinrichtungen verwendet. Diese sind mittlerweile in vielen Ländern vorgeschrieben und teilweise genormt. So müssen beispielsweise für bestimmte Länder der Europäischen Union die Normen DIN EN 62196-1 und DIN EN 62196-2 erfüllt werden.

Aus der deutschen Offenlegungsschrift Nr. DE 10 2014 114 214 A1 ist beispielsweise eine elektrische Ladedose zur Steckverbindung mit einem Stecker bekannt. In dem Dosengehäuse sind auf der Seite des Steckgesichts Lastkontakte angeordnet, welche von jeweils einer Abdeckeinrichtung abdeckbar sind. Die Abdeckeinrichtung umfasst ein plattenförmiges Abdeckelement und ein Verriegelungselement. Das Verriegelungselement ist mit einem elastischen Hebel mit Auflager sowie mit einer Klinke und einem Taster ausgestattet. Der Taster ist auf der Seite des Steckgesichts zugänglich und mit einer Kraft beaufschlagbar. Die Klinke ist zwischen einer Verriegelungsstellung und Entriegelungsstellung bewegbar, um das Abdeckelement der Abdeckeinrichtung translatorisch zu betätigen, das heißt gegenüber dem Lastkontakt zu verschieben, um ihn zugänglich zu machen oder abzudecken.

In der deutschen Offenlegungsschrift Nr. DE 10 2014 108 728 A1 ist eine Verschlusseinrichtung für elektrische Kontaktelemente einer Steckvorrichtung beschrieben. Die Verschlusseinrichtung hat zwei jeweils schwenkbeweglich um jeweils eine Schwenkachse gelagerte Deckelelemente. Die Deckelelemente sind nach dem Einstecken eines Steckers in die Steckvorrichtung mittels eines Arretierungselements in eine Verriegelungsposition überführbar, um in der Verriegelungsposition die Deckelelemente in einer Verschlussposition zu halten.

In der europäischen Patentschrift Nr. EP 2 685 568 B1 wird eine Steckbuchse eines Elektrofahrzeugs zur Aufnahme eines Steckers beschrieben. Die Steckbuchse ist mit einem Paar bügelförmiger Abdeckungen ausgestattet, welche außerhalb des Gehäuses der Steckbuchse bewegbar angeordnet sind. Die Abdeckungen weisen abstehende Abdeckzungen auf, welche über Schlitze im Gehäuse der Steckbuchse in das Innere eingeführt werden können, um elektrische Kontaktelemente abzudecken.

Die bekannten "Shutter"-Lösungen als Verschlusseinrichtungen decken beispielsweise das Steckgesicht eines Steckverbinders, das heißt die in dem Steckabschnitt des Steckverbinders befindlichen oder angeordneten elektrischen Kontaktelemente nur teilweise ab. Ferner ermöglichen die bekannten "Shutter"-Lösungen keine intuitive Bedienung und erfordern beispielsweise ein umständliches Verdrehen des Gegensteckverbinders und/oder einen erhöhten Kraftaufwand.

Es ist eine Aufgabe der vorliegenden Erfindung, eine verbesserte Verschlusseinrichtung bereitzustellen, wobei die Verschlusseinrichtung vorzugsweise durch eine einfache Bedienung gekennzeichnet ist und sämtliche elektrische Kontaktelemente geschützt werden können, das heißt abgedeckt werden können.

Die Aufgabe wird durch die Merkmale des unabhängigen Anspruchs 1 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die Erfindung zeichnet sich dadurch aus, dass das Freigabeelement translatorisch bewegbar gelagert ist und dass das Koppelelement zumindest ein Führungselement zur Koppelung mit dem zumindest einen Abdeckelement aufweist, um das zumindest eine Abdeckelement translatorisch und/oder rotatorisch zu betätigen.

Durch Betätigung des zumindest einen Freigabeelements wird das Koppelelement einerseits zunächst entsperrt, um eine Bewegung durchführen zu können, und durch das zumindest eine erste Stellelement betätigt, um es in Bewegung zu versetzen, um sodann das zumindest eine Abdeckelement zwischen einer Verschlussposition und einer Öffnungsposition zu betätigen. Der Steckabschnitt des Gegensteckverbinders passiert beim Durchführen durch die Gehäuseöffnung der Verschlusseinrichtung sowohl das zumindest eine erste Freigabeelement als auch das zumindest eine erste Stellelement, welche nach Kontaktierung mit dem Steckabschnitt das Koppelelement freigeben und in Bewegung versetzen, um sodann das zumindest eine Abdeckelement durch das Koppelelement zu betätigen, damit der Steckabschnitt weiter durch die Verschlusseinrichtung hindurch zum sodann freigegebenen Steckabschnitt des Steckverbinders geführt werden kann.

Mit der vorliegenden Erfindung kann somit eine Verschlusseinrichtung bereitgestellt werden, welche beispielsweise einfach und intuitiv zu bedienen ist, nachdem der Gegensteckverbinder mit seinem Steckabschnitt lediglich translatorisch in Steckrichtung hin zur Verschlusseinrichtung und durch die Verschlusseinrichtung hindurchgeführt werden muss. Es bedarf beispielsweise keiner Drehbewegung des Gegensteckverbinders, um die Verschlusseinrichtung von einer Verschlussposition in eine Öffnungsposition zu betätigen. Der Steckabschnitt des Gegensteckverbinders kann beim Einstecken oder Einführen in die Verschlusseinrichtung aufgrund ihrer Lagerung im Gehäuse das zumindest eine Freigabeelement und das zumindest eine Stellelement jeweils in einer Richtung betätigen, welche im Wesentlichen quer oder im Wesentlichen senkrecht zur Steckrichtung verläuft.

Die Verschlusseinrichtung kann somit durch den Steckabschnitt des Gegensteckverbinders entsperrt und ferner betätigt werden. Zur Erhöhung der Sicherheit der Verschlusseinrichtung können mehrere Freigabeelemente in der Verschlusseinrichtung angeordnet sein, beispielsweise vorzugsweise in einer Umfangsrichtung und/oder gegenüberliegend.

Das Gehäuse der Verschlusseinrichtung kann vorzugsweise zur lösbaren Verbindung mit dem Steckverbinder konfiguriert sein, vorzugsweise durch eine Steckverbindung und/oder Rastverbindung und/oder Schraubverbindung.

Gemäß einem weiteren Aspekt der Erfindung kann vorgesehen sein, dass das zumindest eine Freigabeelement und/oder das zumindest eine Stellelement im Wesentlichen quer oder im Wesentlichen senkrecht zur Steckrichtung translatorisch bewegbar gelagert und/oder betätigbar ist, vorzugsweise durch Kontaktierung mit dem Steckabschnitt betätigbar. Damit kann beispielsweise eine kompakte und platzsparende Bauweise der Verschlusseinrichtung erzielt werden.

Es ist möglich, dass das zumindest eine Freigabeelement und/oder das zumindest eine Stellelement jeweils einen Anschlag zur Kontaktierung des Steckabschnitts und Betätigung des zumindest einen Freigabeelements und/oder des zumindest einen Stellelements durch den Steckabschnitt aufweist, wobei vorzugsweise der jeweilige Anschlag zumindest abschnittsweise plattenförmig konfiguriert ist und/oder zur Steckrichtung schräg liegend ausgebildet und/oder angeordnet ist. Dadurch kann beispielsweise das zumindest eine Freigabeelement und/oder das zumindest eine Stellelement durch den Steckabschnitt wie jeweils ein Taster bedient werden, wobei sich der Steckabschnitt zur Betätigung in Steckrichtung über den jeweiligen Anschlag schiebt.

Gemäß einem weiteren Gesichtspunkt der Erfindung kann vorgesehen sein, dass das Koppelelement zumindest abschnittsweise ringförmig ausgebildet ist; und/oder das Koppelelement in dem Gehäuse in einer Umfangsrichtung und/oder auf einer Kreisbahn zumindest abschnittsweise translatorisch bewegbar gelagert ist oder zumindest abschnittsweise rotatorisch bewegbar gelagert ist. Mit anderen Worten kann das Koppelelement zwischen entsprechenden Wänden und/oder Wandabschnitten des Gehäuses translatorisch und/oder vorzugsweise rotatorisch bewegbar gleiten.

Es ist möglich, dass das Koppelelement mit zumindest einem Rückstellfederelement verbunden ist, um nach einer Betätigung durch das zumindest eine Stellelement das zumindest eine Abdeckelement von einer Öffnungsposition in eine Verschlussposition betätigen zu können. Dies erfolgt vorzugsweise dann, wenn der Gegensteckverbinder von dem Steckverbinder wieder entfernt wurde und sich somit kein Steckabschnitt in der Verschlusseinrichtung befindet. Das zumindest eine Rückstellfederelement kann das Koppelelement wieder in eine Ausgangsposition, welche eine Verschlussposition der Verschlusseinrichtung darstellt, zurückführen.

Erfindungsgemäß ist es vorgesehen, dass das Koppelelement zumindest ein Führungselement zur Koppelung mit dem zumindest einen Abdeckelement aufweist, um das zumindest eine Abdeckelement translatorisch und/oder rotatorisch zu betätigen.

Es ist möglich, dass das zumindest eine Führungselement vorzugsweise bolzenförmig oder stiftförmig konfiguriert ist und/oder sich im Wesentlichen in Steckrichtung erstreckt, und/oder wobei das zumindest eine Führungselement mit dem Koppelelement integral einstückig ausgebildet ist.

Gemäß einem weiteren Gesichtspunkt der Erfindung kann vorgesehen sein, dass das zumindest eine Freigabeelement und/oder das zumindest eine Stellelement mit jeweils einem Rückstellfederelement verbunden ist, um das zumindest eine Freigabeelement und/oder das zumindest eine Stellelement in eine Ausgangsposition zurückzuführen oder rückführen zu können, vorzugsweise in einer Verschlussposition des zumindest einen Abdeckelements und somit der Verschlusseinrichtung.

Es ist möglich, dass das zumindest eine Freigabeelement jeweils einen Vorsprung aufweist, um mit jeweils einem Abschnitt des Koppelelements, vorzugsweise jeweils einem freien Endabschnitt oder jeweils einer Aussparung des Koppelelements, in einer Verschlussposition des zumindest einen Abdeckelements zu kontaktieren und das Koppelelement zu sperren.

Gemäß einem weiteren Gesichtspunkt der Erfindung kann vorgesehen sein, dass das zumindest eine Abdeckelement zumindest eine zylinderförmige Aussparung, vorzugsweise im Wesentlichen in Steckrichtung, zur rotatorisch bewegbaren Lagerung des zumindest einen Abdeckelements im Gehäuse oder zur Aufnahme zumindest eines Führungselements des Koppelelements aufweist, um das zumindest eine Abdeckelement translatorisch und/oder rotatorisch zu betätigen. Die zumindest eine zylinderförmige Aussparung kann beispielsweise als Durchgangsloch ausgebildet sein. Die zumindest eine zylinderförmige Aussparung kann sich als Durchgangsloch in einer Ansicht zumindest abschnittsweise im Wesentlichen geradlinig erstrecken oder zumindest abschnittsweise gekrümmt oder gewölbt erstrecken.

Es ist möglich, dass das zumindest eine Abdeckelement zumindest eine längliche Aussparung zur Aufnahme zumindest eines Führungselements des Koppelelements aufweist, um das zumindest eine Abdeckelement zumindest rotatorisch zu betätigen. Die zumindest eine längliche Aussparung kann als Langloch ausgebildet sein, welche vorzugsweise zur zumindest einen zylinderförmigen Aussparung beabstandet angeordnet und/oder ausgebildet ist.

Gemäß einem weiteren Aspekt der Erfindung kann vorgesehen sein, dass das zumindest eine Abdeckelement einen Eingriffsabschnitt oder einen Rastabschnitt zum Eingriff, vorzugsweise lösbar formschlüssigen Eingriff, mit zumindest einem weiteren Eingriffsabschnitt oder einen Rastabschnitt zumindest eines weiteren Abdeckelements aufweist.

Vorzugsweise kann die Verschlusseinrichtung vier Abdeckelemente umfassen, welche zueinander komplementäre Eingriffsabschnitte oder Rastabschnitte aufweisen. Ein Eingriffsabschnitt oder ein Rastabschnitt kann beispielsweise keilförmig und/oder hakenförmig ausgebildet sein.

Gemäß einem weiteren Gesichtspunkt der Erfindung kann vorgesehen sein, dass das zumindest eine Abdeckelement, vorzugsweise in einer Ansicht in Steckrichtung, zumindest abschnittsweise sichelförmig ausgebildet ist. Damit können beispielsweise mehrere Abdeckelemente in einer Verschlussposition optimal zueinander anordnet werden.

Es ist möglich, dass die Verschlusseinrichtung ein Deckelelement mit einem schwenkbaren Klappdeckel umfasst, wobei das Deckelelement an der Verschlusseinrichtung lösbar befestigt ist, vorzugsweise mittels einer Schraubverbindung.

Die Erfindung betrifft nach einem weiteren allgemeinen Gesichtspunkt eine Anordnung mit einem Steckverbinder, vorzugsweise mit einer Steckdose, und einer Verschlusseinrichtung wie hierin offenbart.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der Erfindung werden im Folgenden unter Bezugnahme auf die beigefügten Figuren näher erläutert.

Es zeigen:
- Fig. 1: eine Anordnung mit einem Beispiel einer Verschlusseinrichtung gemäß der vorliegenden Erfindung, wobei sich die Verschlusseinrichtung noch in einer Verschlussposition befindet;
- Fig. 2A: eine perspektivische Ansicht der in Figur 1 dargestellten Verschlusseinrichtung mit dem Gegensteckverbinder, wobei sich die Verschlusseinrichtung in einem ersten Zustand befindet;
- Fig. 2B: eine Frontansicht (mit Teilschnitt der Verschlusseinrichtung) der in Figur 2A dargestellten Verschlusseinrichtung mit dem Gegensteckverbinder;
- Fig. 2C: eine vergrößerte Ansicht eines Ausschnitts (Ausschnitt Y) aus Figur 2B;
- Fig. 2D: eine Frontansicht der in Figur 2A dargestellten Verschlusseinrichtung mit dem Gegensteckverbinder;
- Fig. 2E: eine Schnittansicht (Schnitt A-A in Figur 2D) der Verschlusseinrichtung mit dem Gegensteckverbinder;
- Fig. 2F: eine weitere Schnittansicht (Schnitt B-B in Figur 2D) der Verschlusseinrichtung mit dem Gegensteckverbinder;
- Fig. 3A: eine perspektivische Ansicht der in Figur 1 dargestellten Verschlusseinrichtung mit dem Gegensteckverbinder, wobei sich die Verschlusseinrichtung in einem zweiten Zustand befindet;
- Fig. 3B: eine Frontansicht (mit Teilschnitt der Verschlusseinrichtung) der in Figur 3A dargestellten Verschlusseinrichtung mit dem Gegensteckverbinder;
- Fig. 3C: eine vergrößerte Ansicht eines Ausschnitts (Ausschnitt Z) aus Figur 3B;
- Fig. 3D: eine Frontansicht der in Figur 3A dargestellten Verschlusseinrichtung mit dem Gegensteckverbinder;
- Fig. 3E: eine Schnittansicht (Schnitt C-C in Figur 3D) der Verschlusseinrichtung mit dem Gegensteckverbinder;
- Fig. 3F: eine weitere Schnittansicht (Schnitt D-D in Figur 3B) der Verschlusseinrichtung mit dem Gegensteckverbinder;
- Fig. 4A: eine perspektivische Ansicht der in Figur 1 dargestellten Verschlusseinrichtung mit dem Gegensteckverbinder, wobei sich die Verschlusseinrichtung in einem dritten Zustand befindet;
- Fig. 4B: eine Frontansicht (mit Teilschnitt der Verschlusseinrichtung) der in Figur 4A dargestellten Verschlusseinrichtung mit dem Gegensteckverbinder;
- Fig. 4C: eine Frontansicht der in Figur 4A dargestellten Verschlusseinrichtung mit dem Gegensteckverbinder;
- Fig.4D: eine Schnittansicht (Schnitt E-E in Figur 4C) der Verschlusseinrichtung mit dem Gegensteckverbinder;
- Fig. 4E: eine weitere Schnittansicht (Schnitt F-F in Figur 4C) der Verschlusseinrichtung mit dem Gegensteckverbinder;
- Fig. 5A: eine perspektivische Ansicht der in Figur 1 dargestellten Verschlusseinrichtung mit dem Gegensteckverbinder, wobei sich die Verschlusseinrichtung in einem vierten Zustand befindet;
- Fig. 5B: eine Frontansicht (mit Teilschnitt der Verschlusseinrichtung) der in Figur 5A dargestellten Verschlusseinrichtung mit dem Gegensteckverbinder;
- Fig. 5C: eine Frontansicht der in Figur 5A dargestellten Verschlusseinrichtung mit dem Gegensteckverbinder;
- Fig. 5D: eine Schnittansicht (Schnitt G-G in Figur 5C) der Verschlusseinrichtung mit dem Gegensteckverbinder;
- Fig. 6A: eine Frontansicht einer Anordnung von vier Abdeckelementen, welche in einer Verschlussposition befindlich dargestellt sind;
- Fig. 6B: eine Rückansicht einer Anordnung von vier Abdeckelementen, welche in einer Verschlussposition befindlich dargestellt sind;
- Fig. 7A: eine Frontansicht und eine Rückansicht einer Anordnung von vier Abdeckelementen, welche in einer ersten, das heißt in einer Verschlussposition befindlich dargestellt sind;
- Fig. 7B: eine Frontansicht und eine Rückansicht der Anordnung von vier Abdeckelementen, welche in einer zweiten Position befindlich dargestellt sind;
- Fig. 7C: eine Frontansicht und eine Rückansicht der Anordnung von vier Abdeckelementen, welche in einer dritten Position befindlich dargestellt sind;
- Fig. 7D: eine Frontansicht und eine Rückansicht der Anordnung von vier Abdeckelementen, welche in einer vierten Position befindlich dargestellt sind;
- Fig. 7E: eine Frontansicht und eine Rückansicht der Anordnung von vier Abdeckelementen, welche in einer fünften Position befindlich dargestellt sind;
- Fig. 7F: eine Frontansicht und eine Rückansicht der Anordnung von vier Abdeckelementen, welche in einer sechsten Position befindlich dargestellt sind;
- Fig. 7G: eine Frontansicht und eine Rückansicht der Anordnung von vier Abdeckelementen, welche sin einer vierten, das heißt in einer Öffnungsposition befindlich dargestellt sind.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

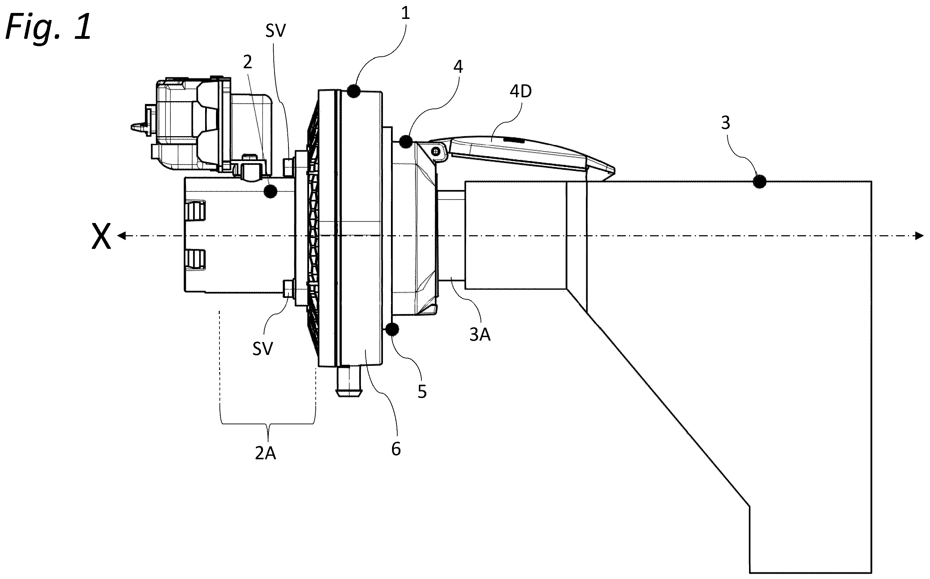

Figur 1 zeigt eine Anordnung mit einem Beispiel einer Verschlusseinrichtung 1 gemäß der vorliegenden Erfindung. Die Verschlusseinrichtung 1 ist mit ihrem Gehäuse 6 an einem Steckverbinder 2, das heißt an einem Steckabschnitt 2A des Steckverbinders 2 mittels Schraubverbindungen SV lösbar befestigt. Der Steckverbinder 2 kann beispielsweise Bestandteil einer Ladesäule für Elektrofahrzeuge sein und im Bereich seines Steckabschnitts 2A zumindest ein elektrisches Kontaktelement, vorzugsweise mehrere elektrische Kontaktelemente, zur Übertragung elektrischer Energie und/oder elektrischer Signale aufweisen (in Figur 1 nicht sichtbar). In Figur 1 ist aus Gründen der Übersichtlichkeit lediglich ein Teil einer Wallbox-Wand 5 einer Ladesäule vereinfacht dargestellt.

Die Verschlusseinrichtung 1 ist mit der Wallbox-Wand 5 einer Ladesäule für Elektrofahrzeuge lösbar verbunden, beispielsweise über Schraubverbindungen (in Figur 1 nicht dargestellt). Zwischen der Verschlusseinrichtung 1 und der Wallbox-Wand 5 kann sich vorzugsweise ein Dichtelement zur Verhinderung von Wasser-und/oder Schmutzeintritt in das Innere der Verschlusseinrichtung 1 befinden.

Die Verschlusseinrichtung 1 ist mit einem äußeren Deckelelement 4 verbunden oder weist dieses auf. Das äußere Deckelelement 4 umfasst einen schwenkbar gelagerten Klappdeckel 4D, um das Innere der Verschlusseinrichtung 1 und vorzugsweise des Steckabschnitts 2A zu schützen.

Die Verschlusseinrichtung 1 befindet sich noch in einer Verschlussposition, jedoch ist zur Ausbildung einer Steckverbindung mit dem Steckverbinder 2 über den Steckabschnitt 2A bereits ein Gegensteckverbinder 3 mit einem zum Steckabschnitt 2A komplementären Steckabschnitt 3A des Gegensteckverbinders 3 angesetzt. Der Gegensteckverbinder 3 ist in Figur 1 schematisch dargestellt. Der Gegensteckverbinder 3 wird in Steckrichtung X durch die oder vorzugsweise über die Verschlusseinrichtung 1 hindurch in den Steckabschnitt 2A gesteckt, um eine elektrisch leitende Verbindung zwischen den jeweiligen elektrischen Kontaktelementen des Steckverbinders 2 und des Gegensteckverbinders 3 zur Übertragung elektrischer Energie und/oder elektrischer Signale herzustellen. Die Verschlusseinrichtung 1 geht hierbei von einer Verschlussposition in eine Öffnungsposition über, um den Steckabschnitt 3A des Gegensteckverbinders 3 in den Steckabschnitt 2A des Steckverbinders 2 stecken zu können. Vorzugsweise ist der Steckverbinder 2 als Steckdose und der Gegensteckverbinder 3 als Stecker ausgebildet. Die Konfiguration, Ausbildung und Funktionsweise der Verschlusseinrichtung 1 wird nachfolgend anhand der weiteren Figuren näher beschrieben.

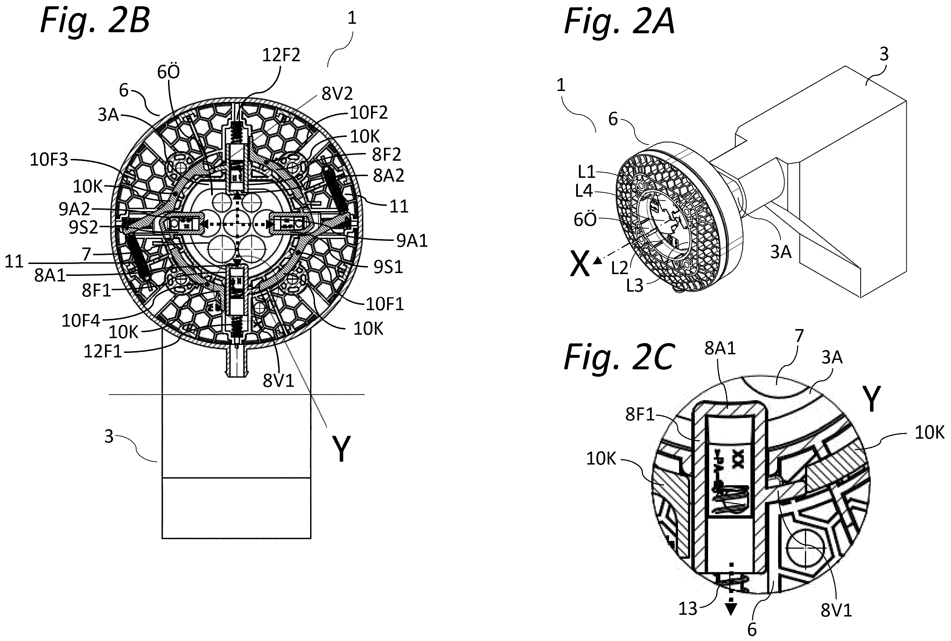

Figur 2A zeigt eine perspektivische Ansicht der in Figur 1 dargestellten Verschlusseinrichtung 1 mit dem Gegensteckverbinder 3, wobei sich die Verschlusseinrichtung 1 in einem ersten Zustand, welcher den Verschlusszustand oder die Verschlussposition repräsentiert, befindet.

Die Verschlusseinrichtung 1 umfasst ein Gehäuse 6. Das Gehäuse 6 ist vorzugsweise mehrteilig ausgebildet. Das Gehäuse 6 erstreckt sich im Wesentlichen in Steckrichtung X und weist eine zylinderförmige Außenkontur auf. Das Gehäuse 6 ist aus einem Isolierstoff, beispielsweise einem Kunststoff, durch zumindest einen Spritzvorgang und/oder durch zumindest einen Gießvorgang hergestellt. Das Gehäuse 6 weist eine Gehäuseöffnung 6Ö auf, welche sich durch die Verschlusseinrichtung 1 durchgehend in Steckrichtung X erstreckt. Die Gehäuseöffnung 6Ö dient zur Betätigung der Verschlusseinrichtung 1 durch einen in der Steckrichtung X geführten Steckabschnitt 3A eines Gegensteckverbinders 3, was nachfolgend noch näher beschrieben wird.

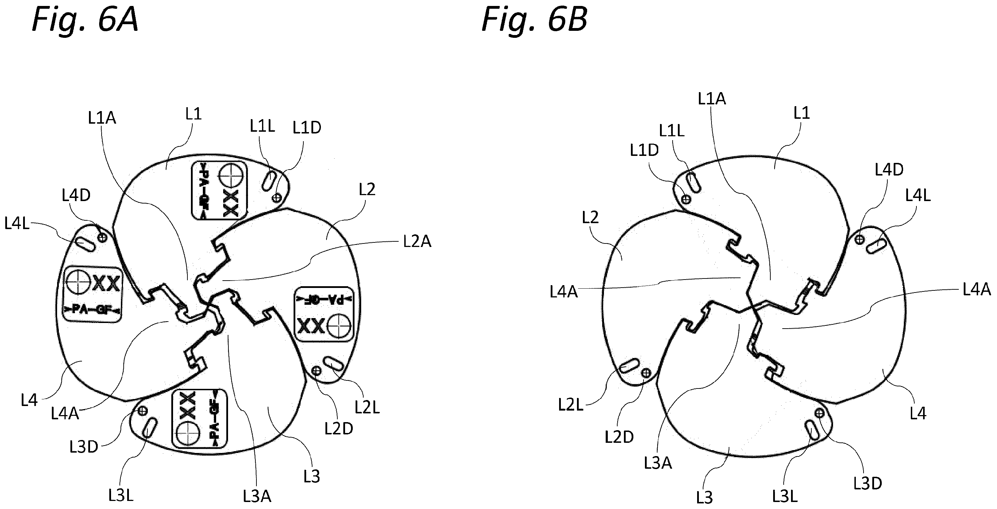

Die Verschlusseinrichtung 1 weist im Inneren des Gehäuses 6 vier bewegbar gelagerte Abdeckelemente L1, L2, L3, L4 in Form von Lamellen auf. Die Abdeckelemente L1, L2, L3, L4 sind flach und/oder plattenförmig ausgebildet. Die Abdeckelemente L1, L2, L3, L4 sind derart zueinander angeordnet und über Eingriffsabschnitte L1A, L2A, L3A, L4A (siehe hierzu die Figuren 6A und 6B) miteinander in Verbindung stehend, sodass sich die Verschlusseinrichtung 1 in einer Verschlussposition befindet.

Figur 2B zeigt eine Frontansicht (mit Teilschnitt der Verschlusseinrichtung 1) der in Figur 2A dargestellten Verschlusseinrichtung 1 mit dem Gegensteckverbinder 3.

Das Gehäuse 6 weist in dieser Teilschnittansicht eine im Wesentlichen kreisförmige Außenkontur auf. Innerhalb des Gehäuses 6 befindet sich der Mechanismus zur Betätigung der Abdeckelemente L1, L2, L3, L4 zur Abdeckung zumindest eines elektrischen Kontaktelements des Steckverbinders 2 in Steckrichtung X (siehe hierzu Figur 1). In Figur 2B ist das Steckgesicht des Gegensteckverbinders 3 an der Gehäuseöffnung 6Ö des Gehäuses 6 der Verschlusseinrichtung 1 erkennbar, wobei beispielhaft ein elektrisches Kontaktelement 7 gekennzeichnet ist, welches sich in dem Steckabschnitt 3A des Gegensteckverbinders 3 befindet oder darin angeordnet ist.

In dem Gehäuse 6, das heißt an entsprechenden Wänden und/oder Wandabschnitten des Gehäuses 6 ist ein Koppelelement 10K bewegbar gelagert, das heißt rotatorisch bewegbar gelagert, vorzugsweise um eine Drehachse, welche in Steckrichtung X verläuft und/oder zur Steckrichtung X im Wesentlichen parallel ist. Das Koppelelement 10K erstreckt sich in Steckrichtung X und ist im Wesentlichen ringförmig ausgebildet. Das Koppelelement 10K ist vorzugsweise aus einem Kunststoff hergestellt.

Das Koppelelement 10K ist mit den Abdeckelementen L1, L2, L3, L4 zum Betätigen der Abdeckelemente L1, L2, L3, L4 zwischen einer Verschlussposition und einer Öffnungsposition der Verschlusseinrichtung 1 gekoppelt. Die Koppelung erfolgt vorzugsweise über bolzenförmig oder stiftförmig konfigurierte und/oder ausgebildete Führungselemente des Koppelelements 10K, von welchen in Figur 1 die Führungselemente 10F1, 10F2, 10F3, 10F4 dargestellt sind. Die Führungselemente 10F1, 10F2, 10F3, 10F4 sind um den Umfang des Koppelelements 10K angeordnet, erstrecken sich im Wesentlichen in Steckrichtung X und können mit dem Koppelelement 10K integral einstückig ausgebildet sein.

Die Abdeckelemente L1, L2, L3, L4 weisen jeweils zylinderförmige Aussparungen L1D, L2D, L3D, L4D in Form von Durchgangslöchern zur rotatorisch bewegbaren Lagerung der Abdeckelemente L1, L2, L3, L4 im Gehäuse 6 auf. Das Gehäuse 6 weist hierzu (ortsfeste) komplementäre zylinderförmige Lagerungsbolzen auf (in den Figuren nicht sichtbar), um welche die Abdeckelemente L1, L2, L3, L4 eine rotatorische Bewegung, das heißt eine Drehbewegung ausführen können.

Ferner weisen die Abdeckelemente L1, L2, L3, L4 längliche Aussparungen L1L, L2L, L3L, L4L in Form von Langlöchern zur Aufnahme der bolzenförmig oder stiftförmig konfigurierten Führungselemente 10F1, 10F2, 10F3, 10F4 des Koppelelements 10K auf (siehe hierzu die Figuren 6A und 6B), um die Abdeckelemente L1, L2, L3, L4 zumindest abschnittsweise zumindest rotatorisch zu betätigen, das heißt zu verdrehen, vorzugsweise von einer Verschlussposition zu einer Öffnungsposition und zurück. Die jeweiligen zylinderförmigen Aussparungen L1D, L2D, L3D, L4D sind hierbei an dem jeweiligen Abdeckelement L1, L2, L3, L4 zu den jeweiligen länglichen Aussparungen L1L, L2L, L3L, L4L entsprechend beabstandet angeordnet und/oder ausgebildet, was insbesondere aus den Figuren 6A und 6B hervorgeht.

Mit anderen Worten findet durch eine an den Abdeckelementen L1, L2, L3, L4 vorhandene kinematische Zwangskopplung mit dem Koppelelement 10K und dem Gehäuse 6 eine Kombination aus translatorischer und vor allem rotatorischer Bewegung der Abdeckelemente L1, L2, L3, L4 durch eine Drehbewegung des Koppelelements 10K statt, sodass die Abdeckelemente L1, L2, L3, L4 von einer Verschlussposition in eine Öffnungsposition betätigt werden können, das heißt bewegt werden können.

Die Betätigung des Koppelelements 10K wird nachfolgend näher beschrieben, wobei hierzu auch auf die Darstellungen in den weiteren Figuren 2C bis 2E verwiesen wird.

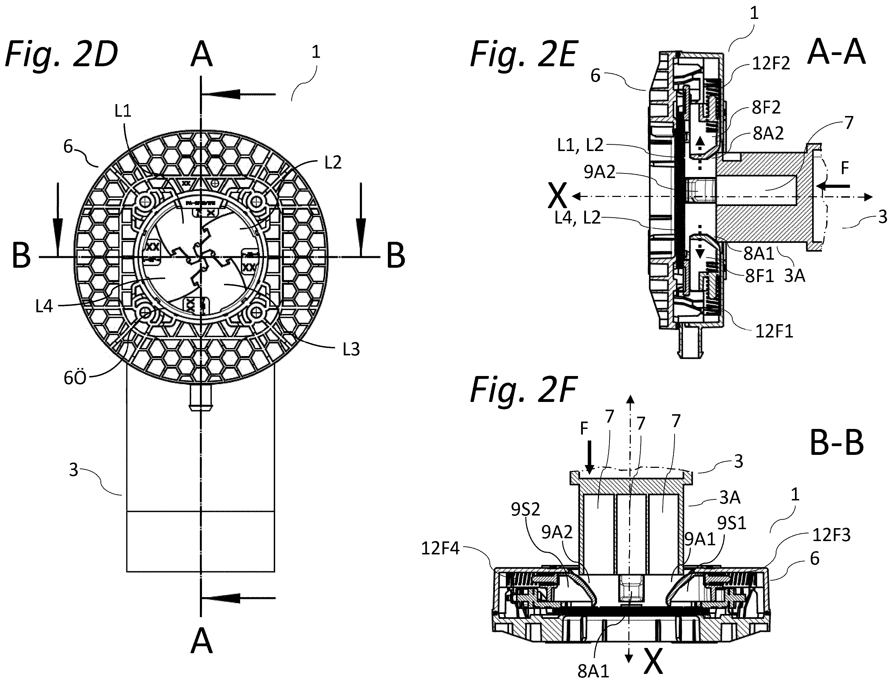

Figur 2C zeigt eine vergrößerte Ansicht eines Ausschnitts (Ausschnitt Y) aus Figur 2B. Figur 2D zeigt eine Frontansicht der in Figur 2A dargestellten Verschlusseinrichtung 1 mit dem Gegensteckverbinder 3. Figur 2E zeigt eine Schnittansicht (Schnitt A-A in Figur 2D) der Verschlusseinrichtung 1 mit dem Gegensteckverbinder 3 und Figur 2F zeigt eine weitere Schnittansicht (Schnitt B-B in Figur 2D) der Verschlusseinrichtung 1 mit dem Gegensteckverbinder 3.

In dem Gehäuse 6 der Verschlusseinrichtung 1 sind ferner ein erstes Freigabeelement 8F1 und ein zweites Freigabeelement 8F2 angeordnet und in dem Gehäuse 6 translatorisch bewegbar gelagert. Das erste Freigabeelement 8F1 und das zweite Freigabeelement 8F2 sind im Wesentlichen quer oder im Wesentlichen senkrecht zur Steckrichtung X translatorisch bewegbar gelagert und/oder betätigbar. Das erste Freigabeelement 8F1 ist im Gehäuse 6 zum zweiten Freigabeelement 8F2 beabstandet und gegenüberliegend angeordnet. Das erste Freigabeelement 8F1 und das zweite Freigabeelemente 8F2 sind konfiguriert, das Koppelelement 10K freizugeben oder zu sperren, das heißt vor allem eine rotatorische Bewegung des Koppelelements 10K zu ermöglichen oder zu verhindern. Hierzu weist sowohl das erste Freigabeelement 8F1 als auch das zweite Freigabeelement 8F2 jeweils einen Vorsprung 8V1, 8V2 auf, um mit einem Abschnitt des Koppelelements 10K zu kontaktieren. Der jeweilige Abschnitt des Koppelelements 10K ist als Aussparung ausgebildet. Alternativ kann der jeweilige Abschnitt des Koppelelements 10K auch als Vorsprung ausgebildet sein.

Die Betätigung des ersten Freigabeelements 8F1 und des zweiten Freigabeelements 8F2 erfolgt über den Steckabschnitt 3A des Gegensteckverbinder 3, welcher in Steckrichtung X in die Verschlusseinrichtung 1 über die Gehäuseöffnung 6Ö einzuführen ist oder eingeführt werden kann. Sowohl das erste Freigabeelement 8F1 als auch das zweite Freigabeelement 8F2 befindet sich hierzu in Steckrichtung X zwangsläufig vor der Anordnung der Abdeckelemente L1, L2, L3, L4. Das erste Freigabeelement 8F1 weist zur Kontaktierung mit dem Steckabschnitt 3A und Betätigung durch den Steckabschnitt 3A den Anschlag 8A1 auf, welcher ferner in den Figuren 2C und 2E dargestellt ist. Ebenso weist das zweite Freigabeelement 8F2 zur Kontaktierung mit dem Steckabschnitt 3A und Betätigung durch den Steckabschnitt 3A den Anschlag 8A2 auf (siehe hierzu ferner die Figuren 2C und 2E). Die Anschläge 8A1, 8A2 sind zumindest abschnittsweise flach und/oder plattenförmig konfiguriert und zur Steckrichtung X schrägliegend angeordnet ist, was beispielsweise aus Figur 2E hervorgeht. Mit anderen Worten sind die Anschläge 8A1 und 8A2 zur Kontaktierung und Betätigung durch den Steckabschnitt 3A konfiguriert. Die jeweilige Bewegungsrichtung des ersten Freigabeelements 8F1 und des zweiten Freigabeelements 8F2 im Gehäuse 6 ist mit Pfeilen beispielsweise in Figur 2E dargestellt.

Mit Einführung des Steckabschnitts 3A in die Verschlusseinrichtung 1 in Steckrichtung X werden das erste Freigabeelement 8F1 und das zweite Freigabeelement 8F2 über ihre Anschläge 8A1, 8A2 allmählich In Richtung Außenwand des Gehäuses 6 gedrückt, das heißt in entgegengesetzte Richtung und im Wesentlichen quer oder im Wesentlichen senkrecht zur Steckrichtung X translatorisch bewegt (siehe hierzu insbesondere den gestrichelten Pfeil in der vergrößerten Ansicht des Ausschnitts Y aus Figur 2B). Ein Verschieben des Gegensteckverbinders 3 und somit des Steckabschnitts 3A in Steckrichtung X bewirkt somit ein Verschieben des ersten und zweiten Freigabeelements 8F1, 8F2 über den jeweiligen Anschlag 8A1, 8A2. Hierzu muss am Gegensteckverbinder 3 eine bestimmte Kraft F (siehe Figur 2E) in Steckrichtung X aufgebracht werden. Sowohl das erste Freigabeelement 8F1 als auch das zweite Freigabeelement 8F2 ist jeweils mit einem Rückstellfederelement 12F1, 12F2 verbunden, um das erste Freigabeelement 8F1 und das zweite Freigabeelement 8F2 wieder in eine Ausgangsposition zurückzuführen oder zurückführen zu können, vorzugsweise in einer Verschlussposition der Abdeckelemente L1, L2, L3, L4.

In dem Gehäuse 6 der Verschlusseinrichtung 1 sind ferner ein erstes Stellelement 9S1 und ein zweites Stellelement 9S2 angeordnet und in dem Gehäuse 6 translatorisch bewegbar gelagert. Das erste Stellelement 8S1 und das zweite Stellelement 9S2 ist jeweils im Wesentlichen quer oder im Wesentlichen senkrecht zur Steckrichtung X translatorisch bewegbar gelagert und/oder betätigbar. Das erste Stellelement 9S1 ist im Gehäuse 6 zum zweiten Stellelement 9S2 beabstandet und gegenüberliegend angeordnet.

Das erste Stellelement 9S1 und das zweite Stellelement 9S2 sind konfiguriert, das Koppelelement 10K nach Freigabe durch das erste Freigabeelement 8F1 und durch das zweite Freigabeelement 8F2 zu betätigen, um die Abdeckelemente L1, L2, L3, L4 von der Verschlussposition in eine Öffnungsposition zu betätigen. Hierzu kontaktieren das erste Stellelement 9S1 und das zweite Stellelement 9S2 jeweils einen komplementär ausgebildeten Kontaktabschnitt des Koppelelements 10K, wobei der jeweilige Kontaktabschnitt derart konfiguriert ist, durch eine translatorische Bewegung des jeweiligen Stellelements 9S1, 9S2 das Koppelelement 10K zusammen mit seiner Lagerung im Gehäuse 6 in eine rotatorische Bewegung zu versetzen, damit die Abdeckelemente L1, L2, L3, L4 über die Führungselemente 10F1, 10F2, 10F3, 10F4 sowie die zylinderförmigen Aussparungen L1D, L2D, L3D, L4D und die länglichen Aussparungen L1L, L2L, L3L, L4L entsprechend von der Verschlussposition in die Öffnungsposition betätigt werden können.

Die Betätigung des ersten Stellelements 9S1 und des zweiten Stellelements 9S2 erfolgt - analog zum ersten Freigabeelement 8F1 und zum zweiten Freigabeelement 8F2 - über den Steckabschnitt 3A des Gegensteckverbinders 3, welcher in Steckrichtung X in die Verschlusseinrichtung 1 über die Gehäuseöffnung 6Ö einzuführen ist oder geführt werden kann. Das erste Stellelement 9S1 weist zur Kontaktierung mit dem Steckabschnitt 3A und Betätigung durch den Steckabschnitt 3A den Anschlag 9A1 auf, welcher in den Figuren 2B und 2F dargestellt ist. Ebenso weist das zweite Stellelement 9S2 zur Kontaktierung mit dem Steckabschnitt 3A und Betätigung durch den Steckabschnitt 3A den Anschlag 9A2 auf (siehe die Figuren 2B, 2E und 2F). Die Anschläge 9A1, 9A2 sind zumindest abschnittsweise flach und/oder plattenförmig konfiguriert und zur Steckrichtung X schrägliegend angeordnet ist, was beispielsweise aus Figur 2F hervorgeht. Vorzugsweise können die Anschläge 9A1, 9A2 zumindest abschnittsweise auch gekrümmt oder gewölbt ausgebildet sein.

Durch die oben beschriebene Koppelung und Betätigung der jeweiligen Elemente zueinander ist es möglich, eine rotatorische Bewegung des Koppelelements 10K zu bewirken, das heißt das Koppelelement 10K rotatorisch zu betätigen und durch diese Bewegung oder Betätigung im Weiteren die Abdeckelemente L1, L2, L3, L4 über ihre Lagerung im Gehäuse 6 und Führung durch das Koppelelement 10K translatorisch und/oder rotatorisch von einer Verschlussposition in eine Öffnungsposition zu betätigen.

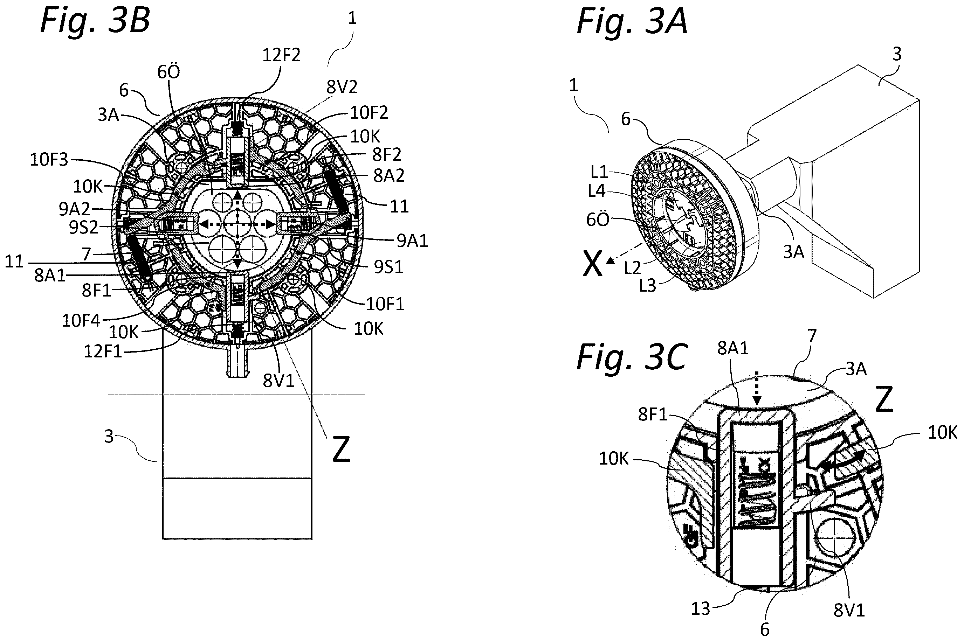

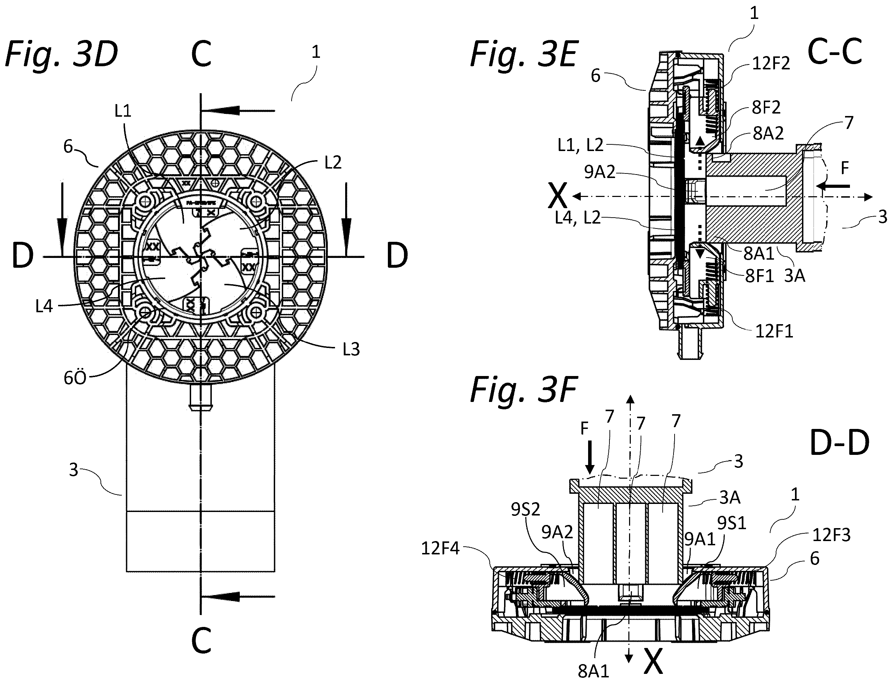

Die Betätigung der Abdeckelemente L1, L2, L3, L4 von einer Öffnungsposition zurück zu der Verschlussposition erfolgt nach einem Abziehen, das heißt einem Entfernen des Steckabschnitts 3A des Gegensteckverbinders 3 aus dem Steckabschnitt 2A des Steckverbinders 2 und somit nach einem Entfernen des Steckabschnitts 3A aus der Verschlusseinrichtung 1 dadurch, dass über Rückstellfederelemente sowohl das Koppelelement 10K als auch das erste und zweite Stellelement 9S1, 9S2 sowie das erste und zweite Federelement 8F1, 8F2 wieder in eine Ausgangsposition betätigt, das heißt bewegt werden. Zur Festlegung definierter Bewegungen der jeweiligen Elemente kontaktieren diese zumindest mit jeweils einem Anschlag am Gehäuse 6 (in den Figuren nicht sichtbar oder nicht dargestellt). Die Stellelemente 9S1, 9S2 werden mangels Kontaktierung mit dem Steckabschnitt 3A durch die Rückstellfederelemente 12F3 und 12F4 in eine Ausgangsposition betätigt, das heißt gedrückt (siehe Figur 2F). Hier ragen die Anschläge 9A1, 9A2 des ersten und des zweiten Stellelements 9S1, 9S2 entsprechend weit in die Durchgangsöffnung 6Ö der Verschlusseinrichtung 1, um erneut durch einen Steckabschnitt 3A betätigt werden zu können. Dadurch bedingt findet eine Rückkehr des Koppelelements 10K in eine Ausgangsposition statt, nachdem das Koppelelement 10K ebenso mit Rückstellfederelementen 11 verbunden ist, welche im Zuge der Betätigung des Koppelelements 10K durch das erste und das zweite Stellelement 9S1, 9S2 vorgespannt wurden (siehe Figur 2B). Die Freigabeelemente 8F1, 8F2 werden mangels Kontaktierung mit dem Steckabschnitt 3A durch die Rückstellfederelemente 12F1 und 12F2 in eine Ausgangsposition betätigt, das heißt gedrückt (siehe Figur 2E). Auch hier ragen die Anschläge 8A1, 8A2 des ersten und des zweiten Freigabeelements 8F1, 8F2 entsprechend weit in die Durchgangsöffnung 6Ö der Verschlusseinrichtung 1, um erneut durch einen Steckabschnitt 3A betätigt werden zu können. Die Freigabeelemente 8F1, 8F2 nehmen hierbei eine Position ein, in welcher sie das Koppelelement 10K sperren, sodass das Koppelelement 10K hinsichtlich seiner Bewegung gehindert ist (siehe hierzu Figuren 3C und 2C).

Die weiteren Figuren 3A bis 3F, 4A bis 4E und 5A bis 5D zeigen anschaulich den Ablauf der Betätigung der Verschlusseinrichtung 1 durch den Steckabschnitt 3A des Gegensteckverbinders 3 von einer Verschlussposition hin zu einer Öffnungsposition anhand aufeinanderfolgender Zustände.

Zur Vermeidung von Wiederholungen werden nachfolgend lediglich einzelne Figuren näher erläutert.

Figur 3A zeigt eine perspektivische Ansicht der in Figur 1 dargestellten Verschlusseinrichtung 1 mit dem Gegensteckverbinder 3, wobei sich die Verschlusseinrichtung 1 in einem zweiten Zustand befindet. Hierbei sind die Abdeckelemente L1, L2, L3, L4 noch in einer Verschlussposition angeordnet (siehe auch Figur 3D).

Der Steckabschnitt 3A ist in Steckrichtung X aufgrund der aufgebrachten Kraft F weiter in das Innere der Verschlusseinrichtung 1 gesteckt und hat bereits die Freigabeelemente 8F1, 8F2 derart betätigt, das heißt translatorisch bewegt, dass sich die Freigabeelemente 8F1, 8F2 in einer Position befinden, in welcher das Koppelelement 10K freigegeben ist, das heißt eine translatorische und/oder vor allem rotatorische Bewegung durchführen kann (siehe Figuren 3B und 3F sowie insbesondere Figur 3C). Aus Figur 3B ergibt sich ferner, dass das erste Stellelement 9S1 und das zweite Stellelement 9S2 bereits das freigegebene Koppelelement 10K zumindest kontaktieren, jedoch noch nicht betätigen, das heißt bewegen.

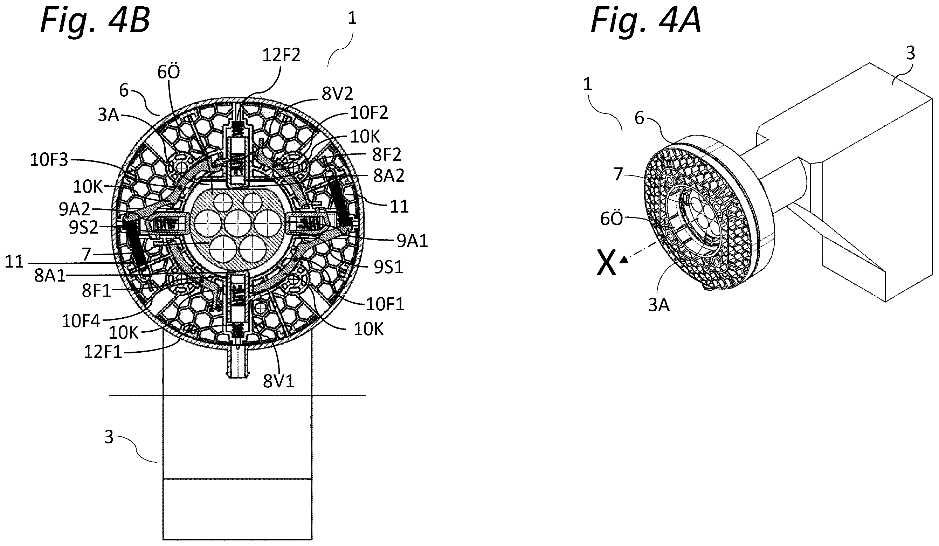

Figur 4A zeigt eine perspektivische Ansicht der in Figur 1 dargestellten Verschlusseinrichtung 1 mit dem Gegensteckverbinder 3, wobei sich die Verschlusseinrichtung 1 in einem dritten Zustand befindet, welcher eine Öffnungsposition repräsentiert. Mit andern Worten wurden die Abdeckelemente L1, L2, L3, L4 durch das Koppelelement 10K nun in eine Öffnungsposition betätigt.

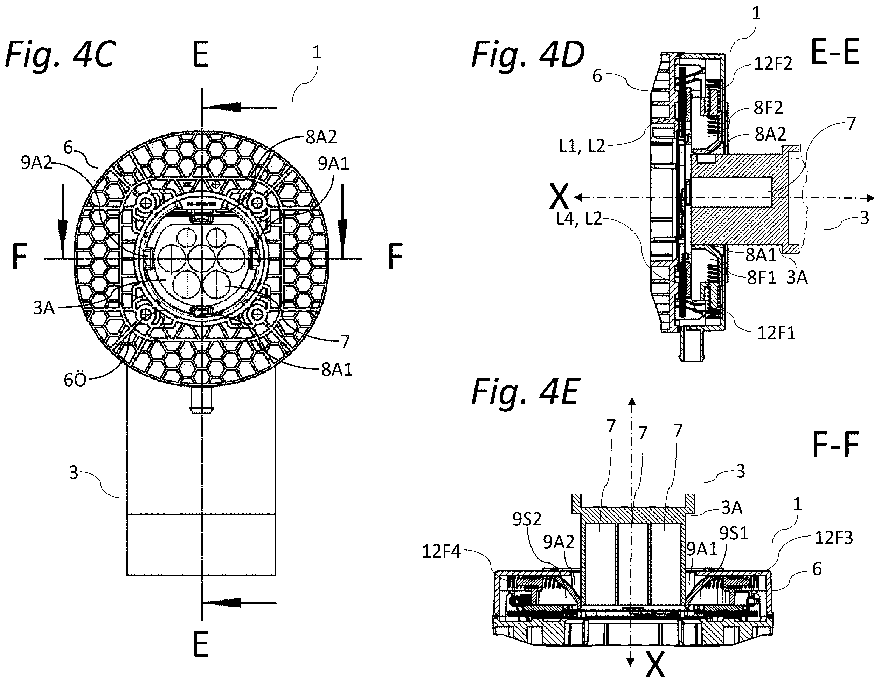

Aus den Figuren 4B und 4E ergibt sich, dass durch den Steckabschnitt 3A das erste Stellelement 9S1 und das zweite Stellelement 9S2 im Wesentlichen quer oder im Wesentlichen senkrecht zur Steckrichtung X soweit betätigt, das heißt translatorisch bewegt wurden, dass diese ferner das Koppelelement 10K betätigt haben. Das Koppelelement 10K wurde aufgrund seiner Lagerung im Gehäuse 6 und der Betätigung durch das erste Stellelement 9S1 und das zweite Stellelement 9S2 in eine rotatorische Bewegung versetzt. Die Rückstellfederelemente 11 wurden dadurch vorgespannt. Über die Führungselemente 10F1, 10F2, 10F3, 10F4 des Koppelelements 10K wurden die mit dem Koppelelement 10K gekoppelten Abdeckelemente L1, L2, L3, L4 einer Betätigung von der Verschlussposition in die Öffnungsposition durch das Koppelelement 10K unterzogen. Die Verschlusseinrichtung 1 ist demnach geöffnet, sodass der Betätigungsabschnitt 3A weiter durch die Verschlusseinrichtung 1 gesteckt oder geführt werden kann, um sodann eine Steckverbindung mit dem Steckabschnitt 2A des Steckverbinders 2 auszubilden (siehe Figur 1). In Figur 4C ist daher das Steckgesicht des Steckabschnitts 3A erkennbar. Von dem ersten und zweiten Freigabeelement 8F1, 8F2 sowie dem ersten und zweiten Stellelement 9S1, 9S2 sind lediglich nur noch die Anschläge 8A1, 8A2 sowie 9A1, 9A2 sichtbar, da diese translatorisch im Gehäuse 6 in die jeweilige Richtung betätigt, das heißt gedrückt oder verschoben wurden. Entsprechend vorgespannt sind die jeweiligen Rückstellfederelemente 12F1, 12F2 sowie 12F3, 12F4 der Freigabeelemente 8F1, 8F2 und der Stellelemente 9S1, 9S1 (siehe Figuren 4D und 4E)

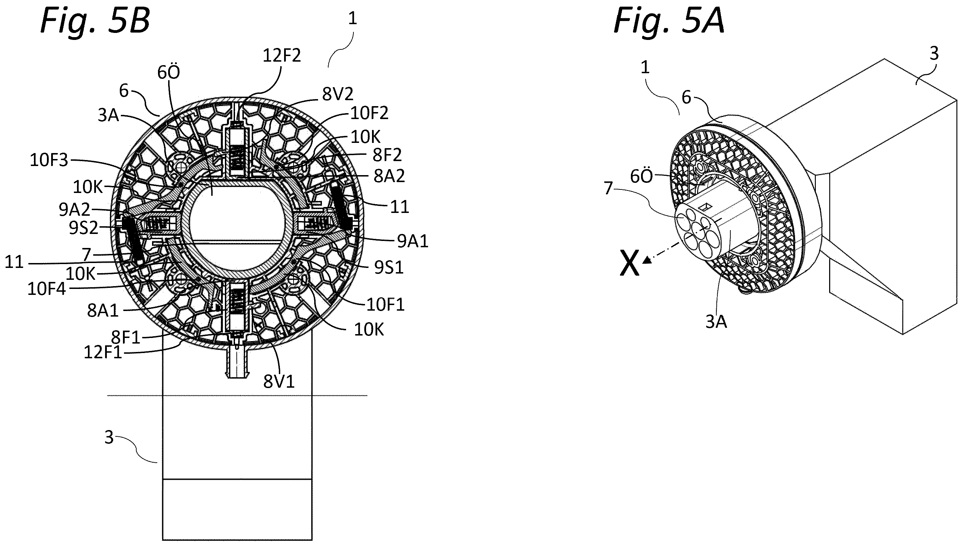

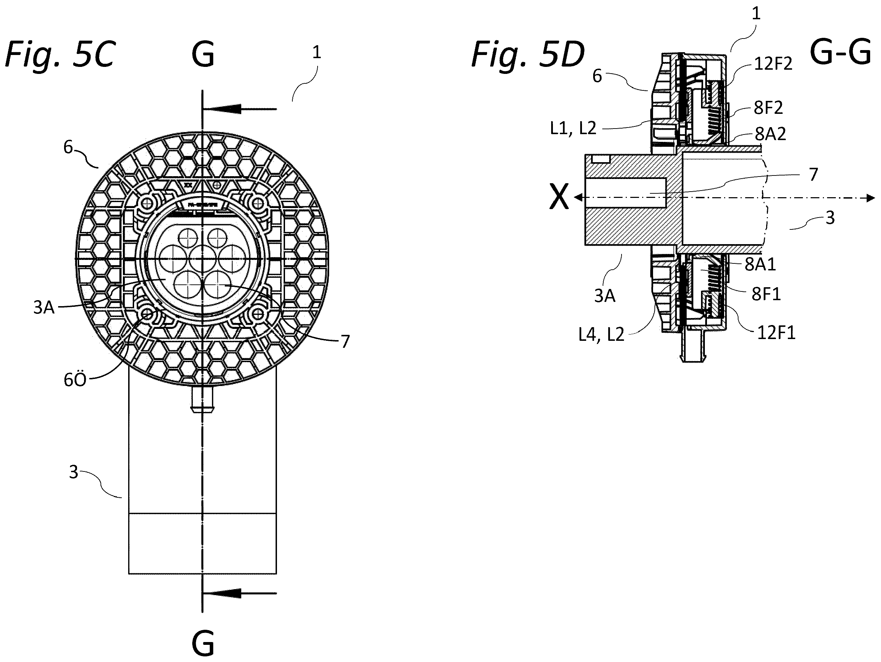

Figur 5A zeigt eine perspektivische Ansicht der in Figur 1 dargestellten Verschlusseinrichtung 1 mit dem Gegensteckverbinder 3, wobei sich die Verschlusseinrichtung 1 in einem vierten Zustand befindet. Der vierte Zustand repräsentiert eine Öffnungsposition bei welcher die Abdeckelemente L1, L2, L3, L4 derart betätigt sind, sodass ein Stecken des Steckabschnitts 3A in den Steckabschnitt 2A möglich ist. Die Freigabeelemente 8F1, 8F2 sowie die Stellelemente 9S1, 9S2 für das Koppelelement 10K wurden hierbei aufgrund der Ausbildung des Steckabschnitts 3A weiter translatorisch betätigt, das heißt bewegt, sodass nun ein Maximalzustand hinsichtlich der Öffnungsposition erreicht ist (siehe hierzu Figur 5D).

Aus Figur 5A ergibt sich, dass bei Vorhandensein eines Steckverbinders 2 (aus Gründen der Übersichtlichkeit nicht dargestellt) der Steckabschnitt 3A eine Steckverbindung mit dem Steckabschnitt 2A des Steckverbinders 2 ausbilden würde.

Figur 6A zeigt eine Frontansicht einer Anordnung von vier Abdeckelementen L1, L2, L3, L4, welche in einer Verschlussposition befindlich dargestellt sind und Figur 6B zeigt eine Rückansicht der Anordnung der vier Abdeckelemente L1, L2, L3, L4, welche in der Verschlussposition befindlich dargestellt sind. Die Abdeckelemente L1, L2, L3, L4 sind, wie bereits oben beschrieben, als Lamellen flach und/oder plattenförmig ausgebildet. Die Lamellen L1, L2, L3, L4 weisen jeweils ein Paar einer zylinderförmigen Aussparung und einer länglichen Aussparung L1L, L1D; L2L, L2D; L3L, L3D; und L4L, L4D auf. Die zylinderförmigen Aussparungen L1D, L2D, L3D, L4D sind zu ihren jeweils zugeordneten länglichen Aussparungen L1L, L2L, L3L, L4L in einem Endbereich des jeweiligen Abdeckelements L1, L2, L3, L4 zueinander beabstandet angeordnet und/oder ausgebildet. Durch die entsprechende Anordnung und Konfiguration der Aussparungen L1L, L1D; L2L, L2D; L3L, L3D; und L4L, L4D wird mittels der Führungselemente 10F1, 10F2, 10F3, 10F4 des Koppelelements 10K und der Lagerung der Abdeckelemente L1, L2, L3, L4 im Gehäuse 6 ermöglicht, bei einer Bewegung des Koppelelements 10K eine Betätigung der Abdeckelemente L1, L2, L3, L4 im Sinne einer translatorischen und vorzugsweise rotatorischen Bewegung durchzuführen.

Jedes Abdeckelement L1, L2, L3, L4 weist einen entsprechenden Eingriffsabschnitt L1A, L2A, L3A, L4A auf, um mit dem jeweils anderen Abdeckelement L1, L2, L3, L4 einen lösbar formschlüssigen Eingriff auszubilden. Ein jeweiliger Eingriffsabschnitt L1A, L2A, L3A, L4A kann hierzu teilweise keilförmig und/oder hakenförmig ausgebildet sein, um vorzugsweise in der Verschlussposition lösbar ineinander zu verrasten, was einen weiteren Sicherheitsaspekt der Verschlusseinrichtung 1 darstellt. Aus den Figuren 6A und 6B ergibt sich ferner, dass jedes der Abdeckelemente L1, L2, L3, L4 zumindest abschnittsweise sichelförmig ausgebildet ist, sowie dass die Abdeckelemente L1, L2, L3, L4 zueinander im Wesentlichen identisch ausgebildet sind.

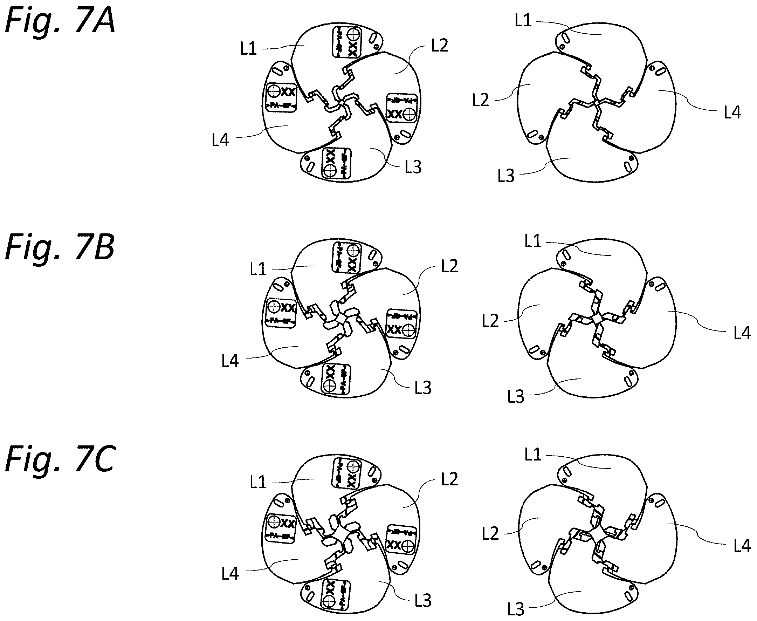

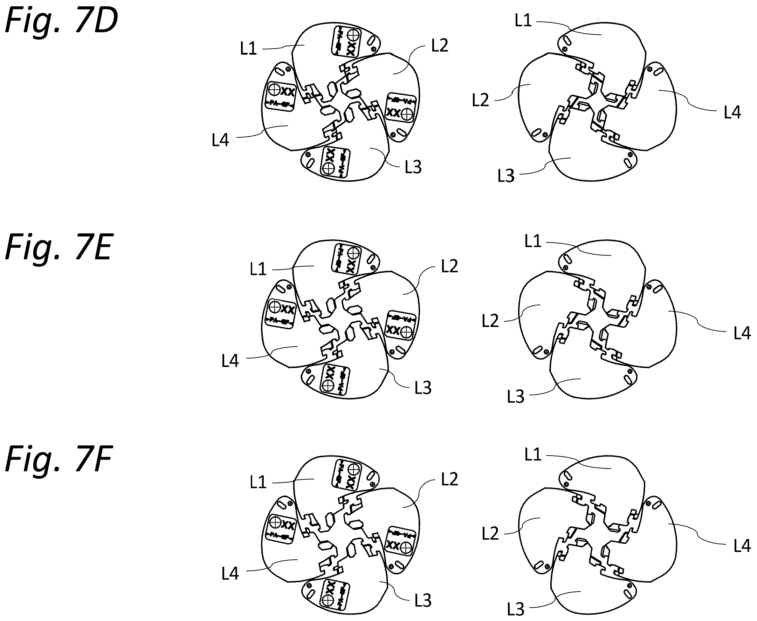

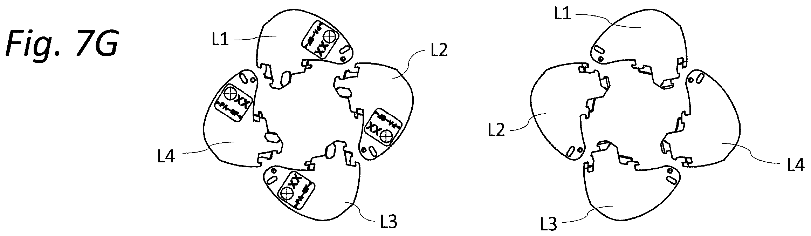

Die Figuren 7A bis 7G zeigen anschaulich die Betätigung, das heißt den Bewegungsablauf der Abdeckelemente L1, L2, L3, L4 der Verschlusseinrichtung 1 zwischen einer Verschlussposition und einer Öffnungsposition.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 1: Verschlusseinrichtung
- 2: Steckverbinder
- 2A: Steckabschnitt des Steckverbinders
- 3: Gegensteckverbinder
- 3A: Steckabschnitt des Gegensteckverbinders
- 4: Deckelelement
- 4D: Klappdeckel
- 5: Wallbox-Wand (zur Befestigung an Ladesäule)
- 6: Gehäuse der Verschlusseinrichtung
- 6Ö: Gehäuseöffnung
- 7: elektrisches Kontaktelement des Gegensteckverbinders
- 8A1: Anschlag des ersten Freigabeelements
- 8A2: Anschlag des zweiten Freigabeelements
- 8F1: erstes Freigabeelement
- 8F2: zweites Freigabeelement
- 8V1: Vorsprung
- 8V2: Vorsprung
- 9A1: Anschlag des ersten Stellelements
- 9A2: Anschlag des zweiten Stellelements
- 9S1: erstes Stellelement
- 9S2: zweites Stellelement '
- 10K: Koppelelement
- 10F1: Führungselement
- 10F2: Führungselement
- 10F3: Führungselement
- 10F4: Führungselement
- 11: Rückstellfederelement
- 12F1: Rückstellfederelement
- 12F2: Rückstellfederelement
- 12F3: Rückstellfederelement
- 12F4: Rückstellfederelement
- F: Kraft
- L1: Abdeckelement (Lamelle)
- L2: Abdeckelement (Lamelle)
- L3: Abdeckelement (Lamelle)
- L4: Abdeckelement (Lamelle)
- L1A...L4A: Eingriffsabschnitt
- L1D...L4D: zylinderförmige Aussparung
- L1L...L4L: längliche Aussparungen
- SV: Schraubverbindung
- X: Längsrichtung

## Patentansprüche

1. Verschlusseinrichtung (1) mit zumindest einem Abdeckelement (L1, L2, L3 L4) zur Abdeckung zumindest eines elektrischen Kontaktelements eines Steckverbinders (2) in einer Steckrichtung (X),
wobei die Verschlusseinrichtung (1) ein Gehäuse (6) mit einer Gehäuseöffnung (6Ö) zur Betätigung der Verschlusseinrichtung (1) durch einen in der Steckrichtung (X) geführten Steckabschnitt (3A) eines Gegensteckverbinders (3) aufweist,
wobei in dem Gehäuse (6) ein Koppelelement (10K) bewegbar, vorzugsweise rotatorisch und/oder translatorisch bewegbar, gelagert ist und mit dem zumindest einen Abdeckelement (L1, L2 L3, L4) zur Betätigung des zumindest einen Abdeckelements (L1, L2, L3, L4) zwischen einer Verschlussposition und einer Öffnungsposition gekoppelt ist,
wobei in dem Gehäuse (6) zumindest ein Freigabeelement (8F1, 8F2) bewegbar gelagert ist und konfiguriert ist, das Koppelelement (10K) freizugeben oder zu sperren,
wobei in dem Gehäuse (6) zumindest ein Stellelement (9S1, 9S2) translatorisch bewegbar gelagert ist und konfiguriert ist, das Koppelelement (10K) nach Freigabe zu betätigen, um das zumindest eine Abdeckelement (L1, L2, L3, L4) von der Verschlussposition in die Öffnungsposition zu betätigen,
**dadurch gekennzeichnet, dass** das Freigabeelement (8F1, 8F2) translatorisch bewegbar gelagert ist und dass das Koppelelement (10K) zumindest ein Führungselement (10F1, 10F2, 10F3, 10F4) zur Koppelung mit dem zumindest einen Abdeckelement (L1, L2, L3, L4) aufweist, um das zumindest eine Abdeckelement (L1, L2, L3, L4) translatorisch und/oder rotatorisch zu betätigen.

2. Verschlusseinrichtung (1) nach Anspruch 1,
wobei das zumindest eine Freigabeelement (8F1, 8F2) und/oder das zumindest eine Stellelement (9S1, 9S2) quer zur Steckrichtung (X) translatorisch bewegbar gelagert und/oder betätigbar ist, vorzugsweise durch Kontaktierung mit dem Steckabschnitt (3A) betätigbar.

3. Verschlusseinrichtung (1) nach Anspruch 1 oder 2,
wobei das zumindest eine Freigabeelement (8F1, 8F2) und/oder das zumindest eine Stellelement (9S1, 9S2) jeweils einen Anschlag (8A1, 8A2; 9A1, 9A2) zur Kontaktierung des Steckabschnitts (3A) und Betätigung des zumindest einen Freigabeelements (F1, 8F2) und/oder des zumindest einen Stellelements (9S1, 9S2) durch den Steckabschnitt (3A) aufweist, wobei vorzugsweise der Anschlag (8A1, 8A2; 9A1, 9A2) zumindest abschnittsweise plattenförmig konfiguriert ist und/oder zur Steckrichtung (X) schräg liegend ausgebildet und/oder angeordnet ist.

4. Verschlusseinrichtung (1) nach einem der vorhergehenden Ansprüche,
wobei das Koppelelement (10K) zumindest abschnittsweise ringförmig ausgebildet ist; und/oder wobei das Koppelelement (10K) in dem Gehäuse (6) in einer Umfangsrichtung und/oder auf einer Kreisbahn zumindest abschnittsweise translatorisch bewegbar gelagert ist oder zumindest abschnittsweise rotatorisch gelagert ist.

5. Verschlusseinrichtung (1) nach einem der vorhergehenden Ansprüche,
wobei das Koppelelement (10K) mit zumindest einem Rückstellfederelement (11) verbunden ist, um nach einer Betätigung durch das zumindest eine Stellelement (9S1, 9S2) das zumindest eine Abdeckelement (L1, L2, L3, L4) von einer Öffnungsposition in eine Verschlussposition betätigen zu können.

6. Verschlusseinrichtung (1) nach einem der Ansprüche 1 bis 5,
wobei das zumindest eine Führungselement (10F1, 10F2, 10F3, 10F4) vorzugsweise bolzenförmig oder stiftförmig konfiguriert ist und/oder sich in Steckrichtung (X) erstreckt, und/oder wobei das zumindest eine Führungselement (10F1, 10F2, 10F3, 10F4) mit dem Koppelelement (10K) integral einstückig ausgebildet ist.

7. Verschlusseinrichtung (1) nach einem der vorhergehenden Ansprüche,
wobei das zumindest eine Freigabeelement (8F1, 8F2) und/oder das zumindest eine Stellelement (9S1, 9S2) mit jeweils einem Rückstellfederelement (12F1, 12F2, 12F3, 12F4) verbunden ist, um das zumindest eine Freigabeelement (8F1, 8F2) und/oder das zumindest eine Stellelement (9S1, 9S2) in eine Ausgangsposition zurückzuführen, vorzugsweise in einer Verschlussposition des zumindest einen Abdeckelements (L1, L2, L3, L4).

8. Verschlusseinrichtung (1) nach einem der vorhergehenden Ansprüche,
wobei das zumindest eine Freigabeelement (8F1, 8F2) jeweils einen Vorsprung (8V1, 8V2) aufweist, um mit jeweils einem Abschnitt des Koppelelements (10K), vorzugsweise jeweils einem freien Endabschnitt oder jeweils einer Aussparung des Koppelelements (10K), in einer Verschlussposition des zumindest einen Abdeckelements (L1, L2, L3, L4) zu kontaktieren und das Koppelelement (10K) zu sperren.

9. Verschlusseinrichtung (1) nach einem der vorhergehenden Ansprüche,
wobei das zumindest eine Abdeckelement (L1, L2, L3, L4) zumindest eine zylinderförmige Aussparung (L1D, L2D, L3D, L4D) zur rotatorisch bewegbaren Lagerung des zumindest einen Abdeckelements (L1, L2, L3, L4) im Gehäuse (6) oder zur Aufnahme zumindest eines Führungselements (10F1, 10F2, 10F3, 10F4) des Koppelelements (10K) aufweist, um das zumindest eine Abdeckelement (L1, L2, L3, L4) translatorisch und/oder rotatorisch zu betätigen.

10. Verschlusseinrichtung (1) nach Anspruch 9,
wobei das zumindest eine Abdeckelement (L1, L2, L3, L4) zumindest eine längliche Aussparung (L1L, L2L, L3L, L4L) zur Aufnahme zumindest eines Führungselements (10F1, 10F2, 10F3, 10F4) des Koppelelements (10K) aufweist, um das zumindest eine Abdeckelement (L1, L2, L3, L4) zumindest rotatorisch zu betätigen.

11. Verschlusseinrichtung (1) nach einem der vorhergehenden Ansprüche,
wobei das zumindest eine Abdeckelement (L1, L2, L3, L4) einen Eingriffsabschnitt (L1A, L2A, L3A, L4A) zum Eingriff, vorzugsweise lösbar formschlüssigen Eingriff, mit zumindest einem weiteren Eingriffsabschnitt (L1A, L2A, L3A, L4A) zumindest eines weiteren Abdeckelements (L1, L2, L3, L4) aufweist.

12. Verschlusseinrichtung (1) nach einem der vorhergehenden Ansprüche,
wobei das zumindest eine Abdeckelement (L1, L2, L3, L4), vorzugsweise in einer Ansicht in Steckrichtung (X), zumindest abschnittsweise sichelförmig ausgebildet ist.

13. Verschlusseinrichtung (1) nach einem der vorhergehenden Ansprüche,
wobei die Verschlusseinrichtung (1) ein Deckelelement (4) mit einem schwenkbaren Klappdeckel (4D) umfasst, wobei das Deckelelement (4) an der Verschlusseinrichtung (1) lösbar befestigt ist, vorzugsweise mittels einer Schraubverbindung.

14. Anordnung mit einem Steckverbinder (2), vorzugsweise Steckdose (2), und einer Verschlusseinrichtung (1) gemäß einem der vorhergehenden Ansprüche.

## Claims

1. Closure device (1) with at least one covering element (L1, L2, L3, L4) for covering at least one electrical contact element of a plug-in connector (2) in a plug-in direction (X),
wherein the closure device (1) has a housing (6) with a housing opening (6Ö) for actuation of the closure device (1) by a plug-in portion (3A), guided in the plug-in direction (X), of a counterpart plug-in connector (3),
wherein, in the housing (6), a coupling element (10K) is mounted movably, preferably rotationally and/or translationally movably, and is coupled to the at least one covering element (L1, L2 L3, L4) for actuation of the at least one covering element (L1, L2, L3, L4) between a closure position and an opening position,
wherein, in the housing (6), at least one release element (8F1, 8F2) is mounted movably and is configured to release or lock the coupling element (10K),
wherein, in the housing (6), at least one adjustment element (9S1, 9S2) is mounted translationally movably and is configured to actuate the coupling element (10K) after release in order for the at least one covering element (L1, L2, L3, L4) to be actuated from the closure position into the opening position,
**characterized in that** the release element (8F1, 8F2) is mounted translationally movably, and **in that** the coupling element (10K) has at least one guide element (10F1, 10F2, 10F3, 10F4) for coupling to the at least one covering element (L1, L2, L3, L4) in order for the at least one covering element (L1, L2, L3, L4) to be actuated translationally and/or rotationally.

2. Closure device (1) according to Claim 1,
wherein the at least one release element (8F1, 8F2) and/or the at least one adjustment element (9S1, 9S2) are/is mounted so as to be translationally movable, and/or are/is translationally actuatable, preferably actuatable by contact being established with the plug-in portion (3A), transversely to the plug-in direction (X).

3. Closure device (1) according to Claim 1 or 2,
wherein the at least one release element (8F1, 8F2) and/or the at least one adjustment element (9S1, 9S2) each have/has a stop (8A1, 8A2; 9A1, 9A2) for establishment of contact of the plug-in portion (3A) and actuation of the at least one release element (F1, 8F2) and/or of the at least one adjustment element (9S1, 9S2) by the plug-in portion (3A), wherein preferably the stop (8A1, 8A2; 9A1, 9A2) is configured to be at least sectionally plate-like and/or is formed and/or arranged so as to be situated inclined to the plug-in direction (X).

4. Closure device (1) according to one of the preceding claims,
wherein the coupling element (10K) is of at least sectionally ring-like form; and/or wherein, in the housing (6), the coupling element (10K) is mounted so as to be at least sectionally translationally movable, or is mounted so as to be at least sectionally rotationally movable, in a circumferential direction and/or on a circular path.

5. Closure device (1) according to one of the preceding claims,
wherein the coupling element (10K) is connected to at least one restoring-spring element (11) in order, after an actuation by the at least one adjustment element (9S1, 9S2), to be able to actuate the at least one covering element (L1, L2, L3, L4) from an opening position into a closure position.

6. Closure device (1) according to one of Claims 1 to 5,
wherein the at least one guide element (10F1, 10F2, 10F3, 10F4) is preferably configured to be bolt-like or pin-like and/or extends in the plug-in direction (X), and/or wherein the at least one guide element (10F1, 10F2, 10F3, 10F4) is formed integrally in one piece with the coupling element (10K).

7. Closure device (1) according to one of the preceding claims,
wherein the at least one release element (8F1, 8F2) and/or the at least one adjustment element (9S1, 9S2) are/is connected to in each case one/a restoring-spring element (12F1, 12F2, 12F3, 12F4) in order for the at least one release element (8F1, 8F2) and/or the at least one adjustment element (9S1, 9S2) to be guided back into a starting position, preferably in a closure position of the at least one covering element (L1, L2, L3, L4).

8. Closure device (1) according to one of the preceding claims,
wherein the at least one release element (8F1, 8F2) has in each case one projection (8V1, 8V2) in order to establish contact with in each case one portion of the coupling element (10K), preferably in each case one free end portion or in each case one cutout of the coupling element (10K), in a closure position of the at least one covering element (L1, L2, L3, L4) and lock the coupling element (10K).

9. Closure device (1) according to one of the preceding claims,
wherein the at least one covering element (L1, L2, L3, L4) has at least one cylindrical cutout (L1D, L2D, L3D, L4D) for rotationally movable mounting of the at least one covering element (L1, L2, L3, L4) in the housing (6), or for receiving at least one guide element (10F1, 10F2, 10F3, 10F4) of the coupling element (10K) in order for the at least one covering element (L1, L2, L3, L4) to be actuated translationally and/or rotationally.

10. Closure device (1) according to Claim 9,
wherein the at least one covering element (L1, L2, L3, L4) has at least one elongate cutout (L1L, L2L, L3L, L4L) for receiving at least one guide element (10F1, 10F2, 10F3, 10F4) of the coupling element (10K) in order for the at least one covering element (L1, L2, L3, L4) to be actuated at least rotationally.

11. Closure device (1) according to one of the preceding claims,
wherein the at least one covering element (L1, L2, L3, L4) has an engagement portion (L1A, L2A, L3A, L4A) for engagement, preferably releasably form-fitting engagement, with at least one further engagement portion (L1A, L2A, L3A, L4A) of at least one further covering element (L1, L2, L3, L4).

12. Closure device (1) according to one of the preceding claims,
wherein the at least one covering element (L1, L2, L3, L4), preferably in a view in the plug-in direction (X), is of at least sectionally sickle-shaped form.

13. Closure device (1) according to one of the preceding claims,
wherein the closure device (1) comprises a lid element (4) with a pivotable hinged lid (4D), wherein the lid element (4) is fastened releasably, preferably by means of a screw connection, to the closure device (1).

14. Arrangement having a plug-in connector (2), preferably a socket outlet (2), and having a closure device (1) according to one of the preceding claims.

## Revendications

1. Dispositif de fermeture (1) comportant au moins un élément de recouvrement (L1, L2, L3, L4) destiné à recouvrir au moins un élément de contact électrique d'un connecteur enfichable (2) dans une direction d'enfichage (X),
dans lequel le dispositif de fermeture (1) comporte un boîtier (6) doté d'une ouverture de boîtier (6O) pour l'actionnement du dispositif de fermeture (1) par une partie d'enfichage (3A) guidée dans la direction d'enfichage (X) d'un connecteur enfichable complémentaire (3),
dans lequel un élément d'accouplement (10K) est monté mobile, de préférence mobile en rotation et/ou en translation, dans le boîtier (6) et est accouplé audit au moins un élément de recouvrement (L1, L2, L3, L4) pour l'actionnement dudit au moins un élément de recouvrement (L1, L2, L3, L4) entre une position de fermeture et une position d'ouverture,
dans lequel au moins un élément de libération (8F1, 8F2) est monté mobile dans le boîtier (6) et est configuré pour libérer ou bloquer l'élément d'accouplement (10K), dans lequel au moins un élément d'actionnement (9S1, 9S2) est monté mobile en translation dans le boîtier (6) et est configuré pour l'actionnement de l'élément d'accouplement (10K) après la libération, afin d'actionner l'élément de recouvrement (L1, L2, L3, L4) de la position de fermeture à la position d'ouverture,
**caractérisé en ce que** l'élément de libération (8F1, 8F2) est monté mobile en translation et **en ce que** l'élément d'accouplement (10K) comporte au moins un élément de guidage (10F1, 10F2, 10F3, 10F4) destiné à l'accouplement avec au moins un élément de recouvrement (L1, L2, L3, L4), afin d'actionner ledit au moins un élément de recouvrement (L1, L2, L3, L4) en translation et/ou en rotation.

2. Dispositif de fermeture (1) selon la revendication 1,
dans lequel l'élément de libération (8F1, 8F2) et/ou l'élément d'actionnement (9S1, 9S2) sont montés et/ou actionnés de manière mobile en translation transversalement à la direction d'enfichage (X), de préférence par mise en contact avec la partie d'enfichage (3A) .

3. Dispositif de fermeture (1) selon la revendication 1 ou 2,
dans lequel ledit au moins un élément de libération (8F1, 8F2) et/ou ledit au moins un élément d'actionnement (9S1, 9S2) comportent respectivement une butée (8A1, 8A2 ; 9A1, 9A2) pour la mise en contact de la partie d'enfichage (3A) et l'actionnement de l'élément de libération (F1, 8F2) et/ou de l'élément d'actionnement (9S1, 9S2) par la partie d'enfichage (3A), dans lequel la butée (8A1, 8A2 ; 9A1, 9A2) est de préférence configuré en forme de plaque au moins par sections et/ou est réalisée et/ou disposée de manière oblique par rapport à la direction d'enfichage (X).

4. Dispositif de fermeture (1) selon l'une des revendications précédentes,
dans lequel l'élément d'accouplement (10K) est réalisé au moins par sections sous forme annulaire ; et/ou dans lequel l'élément d'accouplement (10K) est monté mobile en translation dans le boîtier (6) au moins par sections dans le sens circonférentiel et/ou sur un trajet circulaire ou est monté rotatif au moins par sections.

5. Dispositif de fermeture (1) selon l'une des revendications précédentes,
dans lequel l'élément d'accouplement (10K) est relié à au moins un élément à ressort de rappel (11) pour pouvoir actionner l'élément de recouvrement (L1, L2, L3, L4) d'une position d'ouverture à une position de fermeture après actionnement par l'élément d'actionnement (9S1, 9S2).

6. Dispositif de fermeture (1) selon l'une des revendications 1 à 5,
dans lequel ledit au moins un élément de guidage (10F1, 10F2, 10F3, 10F4) est de préférence configuré sous forme de goujon ou sous forme de broche et/ou s'étend dans la direction d'enfichage (X), et/ou l'élément de guidage (10F1, 10F2, 10F3, 10F4) est réalisé d'une seule pièce avec l'élément d'accouplement (10K).

7. Dispositif de fermeture (1) selon l'une des revendications précédentes,
dans lequel ledit au moins un élément de libération (8F1, 8F2) et/ou ledit au moins un élément d'actionnement (9S1, 9S2) sont respectivement reliés à un élément à ressort de rappel (12F1, 12F2, 12F3, 12F4) pour ramener ledit au moins un élément de libération (8F1, 8F2) et/ou ledit au moins un élément d'actionnement (9S1, 9S2) dans une position de départ, de préférence dans une position de fermeture dudit au moins un élément de recouvrement (L1, L2, L3, L4).

8. Dispositif de fermeture (1) selon l'une des revendications précédentes,
dans lequel ledit au moins un élément de libération (8F1, 8F2) comporte respectivement une saillie (8V1, 8V2) pour venir respectivement en contact avec une partie de l'élément d'accouplement (10K), de préférence respectivement une partie d'extrémité libre ou respectivement un évidement de l'élément d'accouplement (10K), dans une position de fermeture dudit au moins un élément de recouvrement (L1, L2, L3, L4), et pour bloquer l'élément d'accouplement (10K).

9. Dispositif de fermeture (1) selon l'une des revendications précédentes,
dans lequel ledit au moins un élément de recouvrement (L1, L2, L3, L4) comporte au moins un évidement de forme cylindrique (L1D, L2D, L3D, L4D) pour le montage mobile en rotation dudit au moins un élément de recouvrement (L1, L2, L3, L4) dans le boîtier (6) ou pour le logement d'au moins un élément de guidage (10F1, 10F2, 10F3, 10F4) de l'élément d'accouplement (10K), afin d'actionner ledit au moins un élément de recouvrement (L1, L2, L3, L4) en translation et/ou en rotation.

10. Dispositif de fermeture (1) selon la revendication 9,
dans lequel ledit au moins un élément de recouvrement (L1, L2, L3, L4) comporte au moins un évidement allongé (L1L, L2L, L3L, L4L) pour le logement d'au moins un élément de guidage (10F1, 10F2, 10F3, 10F4) de l'élément d'accouplement (10K), afin d'actionner ledit au moins un élément de recouvrement (L1, L2, L3, L4) au moins en rotation.

11. Dispositif de fermeture (1) selon l'une des revendications précédentes,
dans lequel ledit au moins un élément de recouvrement (L1, L2, L3, L4) comporte une partie d'engagement (L1A, L2A, L3A, L4A) pour l'engagement, de préférence pour l'engagement par complémentarité de forme amovible, avec au moins une autre partie d'engagement (L1A, L2A, L3A, L4A) d'au moins un autre élément de recouvrement (L1, L2, L3, L4).

12. Dispositif de fermeture (1) selon l'une des revendications précédentes,
dans lequel ledit au moins un élément de recouvrement (L1, L2, L3, L4) est réalisé, au moins par sections, en forme de faucille, de préférence dans une vue dans la direction d'enfichage (X).

13. Dispositif de fermeture (1) selon l'une des revendications précédentes,
dans lequel le dispositif de fermeture (1) comprend un élément de recouvrement (4) doté d'un couvercle pivotant (4D), l'élément de recouvrement (4) étant fixé de manière amovible au dispositif de fermeture (1), de préférence au moyen d'un assemblage vissé.

14. Dispositif comprenant un connecteur enfichable (2), de préférence une prise de courant (2), et un dispositif de fermeture (1) selon l'une des revendications précédentes.
